# EUROPEAN PATENT APPLICATION

(11) **EP 4 636 666 A1**
(43) Date of publication of application: **22.10.2025**
(21) Application number: 24170671.2
(22) Date of filing: 16.04.2024
(51) Int. Cl.: G06Q 10/08, G06Q 50/60

(54) **A METHOD FOR REGISTRATION OF PARCELS RECEIVED AT A MANNED SERVICE POINT FROM ANY COURIER SERVICE THEREBY ENABLING PARCEL COLLECTION VIA A RECIPIENT DEVICE**

(71) Applicant: SwipBox Development ApS, 6400 Sønderborg (DK)
(72) Inventor: Kaczmarek, Allan, 6400 Sønderborg (DK)
(74) Representative: Patrade A/S

(57) **Abstract**

A method for registration of parcels received at a manned service point from any courier service thereby enabling parcel collection via a recipient device, the method comprising steps of
- receiving at the manned service point a parcel from a courier service;
- obtaining parcel data of the parcel using a service point device;
- providing a storage ID of a storage area section and storing said parcel at said storage area section;
- transmitting the parcel data and storage ID to a service point server;
- receiving, at the service point device, transfer instructions to transfer the parcel with the parcel data to a recipient,
- obtaining the storage ID of the parcel from the service point server;
- transferring the parcel to the recipient; and
wherein the transfer instructions are sent to the service point device from a device of the recipient and wherein a proximity to the service point is a necessary condition for transmitting the transfer instruction.

## Description

### Field of the Invention

The present invention relates to a method of enabling a manned service point for distribution of parcels to store parcels from various different courier services and enable parcel transfer to recipients in a similar manner across courier services.

### Background of the Invention

Presently, manned service points act differently depending on the courier service that the manned service point is associated with. A manned service point may be associated with one, two, three or more different courier services.

Typically, the manned service point has a unique scanning device per courier service, thereby complicating the work of the manned service point.

Thus, there is a need for a method for simplifying parcel transfer at a manned service point, wherein the handling and handover becomes more courier service agnostic.

### Description of the Invention

An object of the invention is achieved by a method for registration of parcels received at a manned service point from any courier service thereby enabling parcel collection via a recipient device. The method comprising steps of
- receiving at the manned service point a parcel from a courier service;
- obtaining parcel data of the parcel using a service point device;
- providing a storage ID of a storage area section and storing said parcel at said storage area section;
- transmitting the parcel data and storage ID to a service point server;
- receiving, at the service point device, transfer instructions to transfer the parcel with the parcel data to a recipient,
- obtaining the storage ID of the parcel from the service point server;
- transferring the parcel to the recipient;
wherein the transfer instructions are sent to the service point device from a device of the recipient and wherein a proximity to the service point is a necessary condition for transmitting the transfer instruction.

The step of transmitting the parcel data and storage ID to a service point server enables that the service point server can track a parcel within the manned service point irrespective of the courier service. Different courier services may have different types of data or have different parcel data stored on the parcel, however by storing the parcel data, then the service point server does not need to track as such what is the important data of the courier service. Thereby, the method enables the manned service point to have a transfer of parcel which is or at least is more courier agnostic.

If the courier service is known and the required data is known, then the stored data may be partial parcel data such as but not limited to the four last digits of parcel ID.

The step of obtaining parcel data of the parcel using a service point device can be performed by scanning parcel data such as a barcode on the parcel or by typing parcel ID into the service point device.

The step of transferring the parcel to the recipient may be performed in accordance with standard operation procedures of the courier service.

The storage area section may be a section for single parcel or be a section for storing several parcels.

The step of providing a storage ID of a storage area section may include a step of scanning a label of storage area section containing the storage ID.

The method is performed by the service point device.

The device of the recipient may be a smart phone of the recipient.

Throughout the application, the parcel data is to be interpreted as to include said parcel's unique ID, i.e. include a unique parcel ID known to the courier service.

In an aspect, the method may include a step of marking the parcel with a service point parcel ID, wherein the transfer instruction includes the service point parcel ID of the parcel. The step of marking may be printing a label and placing said label onto the parcel. The step of marking may be performed by writing the service point parcel ID on the parcel.

The service point parcel ID may be the last four digits of the parcel ID of the courier service.

This enables faster transfer of the parcel as the correct parcel can be identified.

In an aspect, the step of registering may include registering the courier service. Thereby, the service point device can act in accordance with the courier service.

In an aspect, the service point device and the service point server may be a single unit, which significantly simplifies the product.

In an aspect, the transfer instructions may be sent to the service point device from the recipient device via the service point server.

In an aspect, the service point server may be a cloud server. Thus, any communication with the service point server is performed via long-range communication. The long-range communication may be nb-IOT or LTE or other long-range communication protocols.

In an aspect, the service point device may communicate with the device of the recipient via a short-range communication protocol. The short-range communication protocol may be Bluetooth or Bluetooth low-energy or NFC or similar short-range communication protocols.

In an aspect, the proximity may be checked by short-range communication between the service point device and the device of the recipient.

In another embodiment, the proximity may be checked via GPS of the device of the recipient.

The device of the recipient may preferably be a smart phone or similar smart device owned by the recipient.

An object of the invention is achieved by a method for collection of a parcel at a manned service point using a device of the recipient, wherein the device of the recipient transmits transfer instructions to the manned service point, wherein the method comprises steps of
- receiving parcel data of a parcel stored at a manned service point;
- transmitting transfer instructions of said parcel including at least partial data of the parcel data to a service point device, wherein a proximity to the manned service point is a necessary condition for transmitting the transfer instruction;
- receiving the parcel.

In most cases, the parcel data of a parcel stored at a manned service point is received from the courier service, which courier service transmits the parcel data of the parcel to be picked-up by the recipient.

In an aspect, the proximity may be checked by short-range communication between the service point device and the device of the recipient.

In an aspect, the step of transmitting transfer instructions to said service point device may be performed via a service point server.

An object of the invention is achieved by a method for storing parcel data at the service point server and storage ID of parcels stored at the manned service point, the method comprises steps of
- receiving parcel data of a parcel and storage ID of a storage area section from a service point device, wherein the parcel is stored at the storage area section with storage ID, and the method either comprises steps of
- receiving a request for storage ID of a parcel with parcel data from the service point device; followed by transmitting the storage ID of the parcel with parcel data to the service point device;
   or
- receiving transfer instruction of a parcel with parcel data from a device of a recipient; followed by transmitting the transfer instruction and the storage ID of the parcel with parcel data to the service point device.

The two options can be performed depending on whether the service point server can communicate with the device of the recipient or if the service point communicates with the service point device.

In an aspect, wherein the method may include a step of marking the parcel with a service point parcel ID, wherein the transfer instruction includes the service point parcel ID of the parcel.

In an aspect, the method further may comprise steps of
- receiving an acknowledgement of parcel transfer from the service point device and/or device of a recipient.

### Description of the Drawing

Embodiments of the invention will be described in the figures, whereon:
- Fig. 1: illustrates storing of a parcel at a manned service point;
- Fig. 2: illustrates a recipient device being used for collection of a parcel; and
- Fig. 3: illustrates courier delivery to the manned service point; and
- Fig. 4: illustrates parcel collection performed by a recipient using a recipient device.

### Detailed Description of the Invention

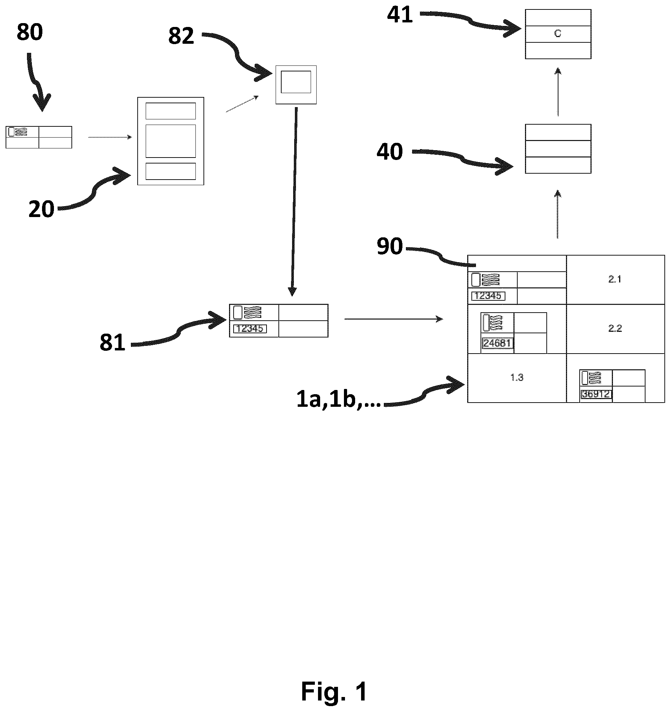

Fig. 1 illustrates storing of a parcel at a manned service point, wherein the manned service point obtains parcel data of the parcel and stores the parcel data on a service point server 40. The figure discloses the flow for delivery of a parcel 80 to a manned service point with an allocation system.

A courier service delivers a parcel 80 to the manned service point. The manned service point performs a step of obtaining parcel data of the parcel 80 using a service point device 20. The parcel data can be obtained by scanning a barcode or by a camera registering text or numbers or by an employee manually pressing the parcel data into the service point device 20. The service point device 20 may be a portable computer or a smart phone.

Optionally, there may be a step of marking the parcel 80 with a service point parcel ID 81. Said service point parcel ID 81 may be a label printed using a printer 82 or an ID written on the parcel 80 by an employee of the service point. The label or ID may be a series of numbers and/or letters and/or symbols or similar such that the parcel can be recognised without reading the parcel data.

The manned service point may have several storage area sections 1a,1b,...., where each storage area section has a unique storage ID in the present example 1.1 to 2.3 representing columns and rows.

The service point device 20 may then obtain the storage ID 1a,1b,... and the parcel 80 is stored at the storage area section. The order of storing the parcel 80 and obtaining the storage ID 1a,1b,... of the storage area section can be performed in any order. The step of obtaining can be performed by scanning a bar code or storage ID 1a, 1b by the service point device 20 or by manually selecting the storage ID 1a, 1b.... There may be stored one, two, three or more parcels at each storage area section hence the storage ID may not as such be unique for a parcel 80, however a parcel can be identified by the parcel data or the service point parcel ID.

The service point device 20 transmits the parcel data and storage ID to a service point server 40 such that at least storage ID of the parcel can be shared with the service point device 20 when a recipient request collection of the parcel 80 with parcel data.

The service point server 40 may transmit the data to the courier server 41, however this is not necessary for the method to work. In some embodiments the service point server 40 may transmit information that the parcel 40 with parcel data is stored at storage area section with a specific storage ID, however the information is not really needed by the courier service. The courier service may however share the information with the recipient of the parcel 80.

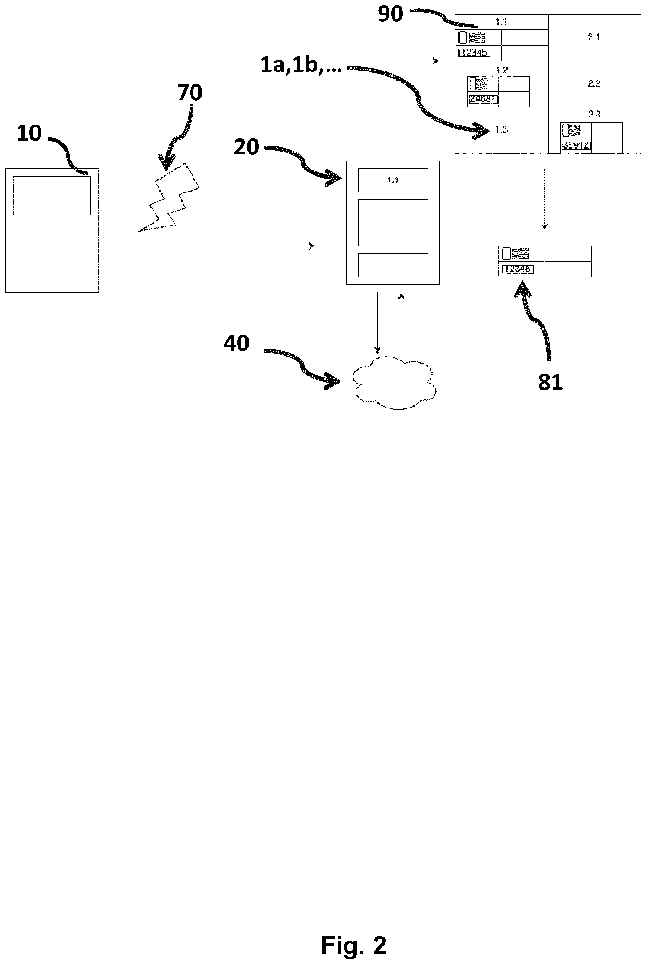

Fig. 2 illustrates a recipient device 10 being used for collection of a parcel 80. The recipient device 10 may be the smart phone of the recipient. The recipient device 10 can if in the proximity of the manned service point transmit transfer instructions to transfer a parcel 80 with a specific parcel data.. The service point device 20 may receive the transfer instruction or the service point server 40 may receive the transfer instruction.

In both cases the service point server 40 will transmit the storage ID and the parcel data and/or the service point parcel ID 81 to the recipient device such that an employee can collect the parcel 80 with the service point parcel ID 81.

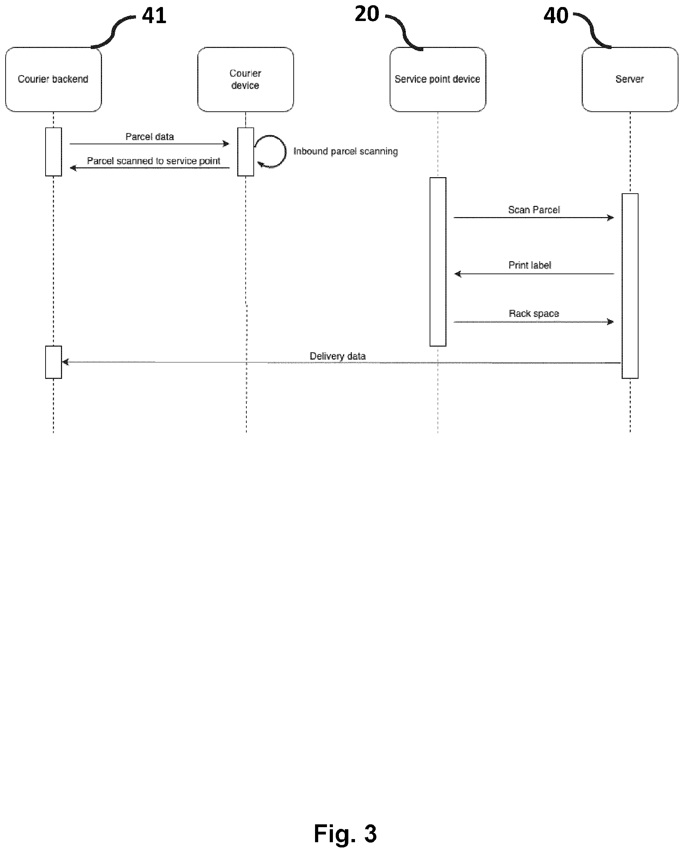

Fig. 3 illustrates courier delivery to the manned service point. The courier server or courier backend 41 sends parcel data to the courier device of a courier. The courier will when at the manned service point perform an inbound scanning of the parcel using the courier device and transmit information to the courier backend 41 that the parcel has been scanned to the manned service point. Thereby, the parcel is now the responsibility of the manned service point.

In accordance with the invention, at the manned service point the parcel data of the parcel is obtained using a service point device 20. This step of obtaining may be performed by scanning a computer readable marking such as a QR code or bar code or a series of symbols. The step of obtaining can be by receiving a wireless signal from the parcel or by manually inputting the parcel data into the service point device. The service point device 20 may be portable computer such as a smart phone or tablet.

The obtained parcel data is transferred to a service point server 40, which may be a local server or a cloud server.

The service point server 40 may instruct a printer to print a label containing a service point parcel ID or the service point server 40 may sent instructions to the service point device to mark the parcel with the service point parcel ID. The service point parcel ID is preferably at least partially based on the parcel data such as the last four digits of the courier's unique parcel ID.

The service point device transmits a storage ID of a storage area section wherein the parcel is stored. The storage area section may be a rack space.

The service point server 40 may transmit the storage ID to the courier backend 41 such that the courier backend can share the information with the recipient of the parcel.

In the embodiments, wherein the parcel is marked such as marked by a label. The service point server 40 may transmit the service point parcel ID to the courier backend 41 such that the courier backend can share the information with the recipient of the parcel.

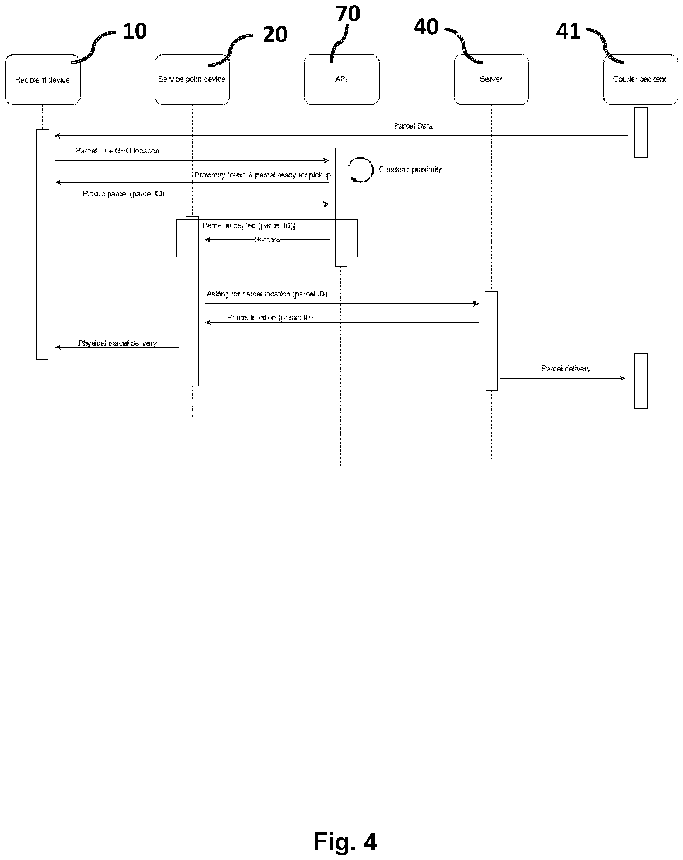

Fig. 4 illustrates parcel collection performed by a recipient using a recipient device 10. The recipient device 10 may be the recipient's smart phone or a similar portable device of the recipient.

The recipient device 10 receives parcel data of the parcel to be collected from the courier backend 41 or courier server 41.

The recipient device 10 may have stored thereon an API 70 performing a proximity check to check whether the recipient device 10 is in the proximity to the manned service point. The API 70 may be stored on a server which the recipient device 10 is in communication with to enable transfer of information.

The recipient device 10 transmits or provide the parcel data (at least including parcel ID) of the parcel to be collected and geo location of the recipient device 10 to the API 70, which API 70 performs the proximity check. The API 40 transmits or provide information to the recipient device 10 that the proximity check is passed, and the parcel is ready for pick up. Alternatively, or in addition, the recipient device forwards the parcel data (at least including parcel ID) of the parcel to be collected and a service point device data packet received from the service point device via a short range communication such as Bluetooth or NFC.

The recipient device 10 following passing the proximity test forward transfer instructions of the parcel with a specific parcel data i.e. pickup parcel (parcel ID). The API 70 then forwards the transfer instructions to the service point device 20. The service point device 20 request the parcel location i.e. storage ID of the parcel with said parcel data (Parcel ID). The service point server 40 transmits the storage ID to the service point device 20 thereby enabling faster transfer of the parcel. The parcel is then physically transferred to the recipient with the recipient device 10.

The service point server 40 may then transmit information to the courier backend 41 that the parcel with parcel data has been collected by the recipient. Alternatively, or in addition, the recipient device may transmit information to the courier backend 41 that the parcel with parcel data has been collected by the recipient.

In the embodiments where the parcel has been marked by the service point parcel ID, then the "parcel ID" in the figure and description above can be replaced by the service point parcel ID.

## Claims

1. A method for registration of parcels received at a manned service point from any courier service thereby enabling parcel collection via a recipient device, the method comprising steps of
- receiving at the manned service point a parcel from a courier service;
- obtaining parcel data of the parcel using a service point device;
- providing a storage ID of a storage area section and storing said parcel at said storage area section;
- transmitting the parcel data and storage ID to a service point server;
- receiving, at the service point device, transfer instructions to transfer the parcel with the parcel data to a recipient,
- obtaining the storage ID of the parcel from the service point server;
- transferring the parcel to the recipient;
wherein the transfer instructions are sent to the service point device from a device of the recipient and wherein a proximity to the service point is a necessary condition for transmitting the transfer instruction.

2. The method according to claim 1, wherein the method includes a step of marking the parcel with a service point parcel ID, wherein the transfer instruction includes the service point parcel ID of the parcel.

3. The method according to claim 1 or 2, wherein the step of registering includes registering the courier service.

4. The method according to any of claims 1 to 3, wherein the service point device and the service point server is a single unit.

5. The method according to any of claims 1 to 4, wherein the transfer instructions are sent to the service point device from the recipient device via the service point server.

6. The method according to claim 5, wherein the service point server is a cloud server.

7. The method according to any of claims 1 to 6, wherein the service point device communicates with the device of the recipient via a short-range communication protocol.

8. The method according to any of claims 1 to 8, wherein the proximity is checked by short-range communication between the service point device and the device of the recipient.

9. The method according to claim 8, wherein the short-range communication is in accordance with the Bluetooth protocol or NFC protocol.

10. A method for collection of a parcel at a manned service point using a device of the recipient, wherein the device of the recipient transmits transfer instructions to the manned service point, wherein the method comprises steps of
- receiving parcel data of a parcel stored at a manned service point;
- transmitting transfer instruction of said parcel including at least partial data of the parcel data to a service point device, wherein a proximity to the manned service point is a necessary condition for transmitting the transfer instruction;
- receiving the parcel.

11. A method according to claim 10, wherein the proximity is checked by short-range communication between the service point device and the device of the recipient.

12. A method according to claim 10, wherein the step of transmitting transfer instructions to said service point device is performed via a service point server.

13. A method for storing at service point server parcel data and storage ID of parcels stored at the manned service point, the method comprises steps of
- receiving parcel data of a parcel and storage ID of a storage area section from a service point device, wherein the parcel is stored at the storage area section with storage ID, and the method either comprises steps of
- receiving a request for storage ID of a parcel with parcel data from the service point device; followed by transmitting the storage ID of the parcel with parcel data to the service point device;
or
- receiving transfer instruction of a parcel with parcel data from a device of a recipient; followed by transmitting the transfer instruction and the storage ID of the parcel with parcel data to the service point device.

14. A method according to claim 13, wherein the method includes a step of marking the parcel with a service point parcel ID, wherein the transfer instruction includes the service point parcel ID of the parcel.

15. A method according to claims 13 to 14, wherein the method further comprises steps of
- receiving an acknowledgement of parcel transfer from the service point device and/or device of a recipient.
